# EUROPÄISCHE PATENTSCHRIFT

(11) **EP 3 717 723 B1**
(45) Veröffentlichungstag und Bekanntmachung des Hinweises auf die Patenterteilung: **03.12.2025**
(21) Anmeldenummer: 18807605.3
(22) Anmeldetag: 20.11.2018
(51) Int. Cl.: E05F 15/622

(54) **SPINDELANTRIEBSBAUGRUPPE, FAHRZEUGKLAPPE MIT EINER SPINDELANTRIEBSBAUGRUPPE SOWIE VERFAHREN ZUR MONTAGE EINES UMLAUFRÄDERGETRIEBES EINER SPINDELANTRIEBSBAUGRUPPE**
SPINDLE DRIVE ASSEMBLY, VEHICLE FLAP WITH A SPINDLE DRIVE ASSEMBLY AND METHOD FOR INSTALLING AN EPICYCLIC GEARING OF A SPINDLE DRIVE ASSEMBLY
MODULE D'ENTRAÎNEMENT À VIS, OUVRANT DE VÉHICULE DOTÉ D'UN MODULE D'ENTRAÎNEMENT À VIS ET PROCÉDÉ DE MONTAGE D'UNE BOÎTE À TRAINS ÉPICYCLOÏDAUX D'UN MODULE D'ENTRAÎNEMENT À VIS

(30) Priorität: 30.11.2017 DE 102017128388
(43) Veröffentlichungstag der Anmeldung: 07.10.2020
(73) Patentinhaber: Minebea AccessSolutions Deutschland GmbH, 85253 Erdweg (DE)
(72) Erfinder: KUMMER, Frank, 85253 Erdweg (DE)
(74) Vertreter: Prinz & Partner mbB
(86) Internationale Anmeldenummer: PCT/EP2018/081960
(87) Internationale Veröffentlichungsnummer: WO 2019/105806

(56) Entgegenhaltungen:
- WO-A1-2017/022581
- CN-A- 107 317 428
- DE-A1- 102010 006 306
- DE-A1- 102014 211 141
- DE-A1- 102017 122 189
- US-A1- 2006 247 089
- US-A1- 2016 144 694

## Beschreibung

Die Erfindung betrifft eine Spindelantriebsbaugruppe zum Öffnen und/oder Schließen einer Fahrzeugklappe gemäß dem Oberbegriff des Anspruchs 1.

Ferner betrifft die Erfindung eine Fahrzeugklappe, insbesondere eine Fahrzeugheckklappe oder einen Fahrzeugkofferraumdeckel, mit einer solchen Spindelantriebsbaugruppe.

Zusätzlich betrifft die Erfindung ein Verfahren zur Montage eines Umlaufrädergetriebes einer derartigen Spindelantriebsbaugruppe.

Fahrzeugklappen sowie Spindelantriebsbaugruppen der eingangs genannten Art sind aus dem Stand der Technik bekannt.

Beispielsweise zeigt die CN 107 317 428 A eine Spindelantriebsbaugruppe gemäß dem Oberbegriff des Anspruchs 1. Eine weitere Spindelantriebsbaugruppe ist aus der US 2016/144694 A1 bekannt geworden.

Die DE 10 2014 211141 A1 offenbart ein Planetengetriebe mit einer ersten Planetenradstufe mit einem ersten Planetenrad und einer zweiten Planetenradstufe mit einem zweiten Planetenrad. Die Planetenräder sind dabei jeweils auf unterschiedlichen Achsen gelagert und nicht drehfest miteinander verbunden.

Aus der DE 10 2010 006 306 A1 sind ein Getriebe mit einem mit einer Antriebswelle gekoppelten Antriebsrad, sowie mindestens einem gestuften Doppelzahnrad mit einem antriebsseitigen Zahnradabschnitt und einem abtriebsseitigen Zahnradabschnitt bekannt.

Die US 2006/247089 A1 zeigt ein Getriebe mit einem Sonnenrad und Planetenräder, das als Untersetzungsgetriebe verwendet wird.

Die bekannten Spindelantriebsbaugruppen umfassen in der Regel einen elektrischen spindelantrieb, mittels dem die zugeordnete Fahrzeugklappe geöffnet und/oder geschlossen werden kann. Ein Nutzer eines zugehörigen Fahrzeugs muss also das Öffnen und/oder Schließen nicht mehr manuell vornehmen. Er muss lediglich einen Befehl zum Öffnen oder Schließen an die Spindelantriebsbaugruppe absenden, was er beispielsweise über eine Funkfernbedienung oder über einen im Fahrzeug angeordneten Schalter tun kann. Auch kann ein fahrzeugaußenseitig angeordneter Fußschalter verwendet werden, der berührungslos arbeiten kann.

Um beim Öffnen und Schließen die gewünschte Bewegungsgeschwindigkeit der Fahrzeugklappe zu erreichen, muss die Drehzahl eines Spindelantriebsmotors reduziert werden, wofür in bekannten Spindelantriebsbaugruppen ein Reduktionsgetriebe verwendet wird.

Die Aufgabe der Erfindung ist es, eine Spindelantriebsbaugruppe mit einem besonders kompakten Reduktionsgetriebe anzugeben. Darüber hinaus soll das Reduktionsgetriebe einen hohen Wirkungsgrad aufweisen.

Die Aufgabe wird durch eine Spindelantriebsbaugruppe gemäß Anspruch 1 gelöst. Der Spindelantriebsmotor ist in einer bevorzugten Ausführungsform ein Elektromotor. Durch das zweistufige Umlaufrädergetriebe kann die für die Bewegung der Fahrzeugklappe notwendige Übersetzung bereitgestellt werden. Gleichzeitig ist ein solches Getriebe entlang der Spindelantriebsachse besonders kompakt. Es baut also axial kurz. Zudem weisen Umlaufrädergetriebe einen vergleichsweise hohen Wirkungsgrad auf.

Die beiden Stufen des zweistufigen Umlaufrädergetriebes können als spindelseitige und motorseitige Umlaufrädergetriebestufe bezeichnet werden.

Bevorzugt ist das zweistufige Umlaufrädergetriebe ein Reduktionsgetriebe mit einer Übersetzung von 10:1 bis 20:1, insbesondere von 15:1 bis 18:1.

Erfindungsgemäß umfasst das zweistufige Umlaufrädergetriebe einen singulären Planetenträger. Der Planetenträger ist also der Planetenträger für eine spindelseitige Umlaufrädergetriebestufe und eine motorseitige Umlaufrädergetriebestufe. Er kann einstückig hergestellt sein. Dadurch ist der Aufbau des zweistufigen Umlaufrädergetriebes verhältnismäßig einfach. Es resultiert, dass das Umlaufrädergetriebe aufwandsarm hergestellt und montiert werden kann. Im Vergleich zu zweistufigen Umlaufrädergetrieben mit zwei separaten Planetenträgern kann ein Umlaufrädergetriebe mit einem singulären Planetenträger zudem axial kürzer gebaut werden.

Der Planetenträger ist vorzugsweise aus Kunststoff hergestellt, insbesondere aus einem Polyamid, zum Beispiel Nylon, das auch als PA 66 bezeichnet wird. Der Kunststoff kann mit Verstärkungsfasern, insbesondere Glasfasern versetzt sein.

Erfindungsgemäß umfassen eine erste Umlaufrädergetriebestufe und eine zweite Umlaufrädergetriebestufe eine gleiche Anzahl an Planetenrädern, wobei jeweils ein Planetenrad der ersten Umlaufrädergetriebestufe und ein Planetenrad der zweiten Umlaufrädergetriebestufe auf einer gemeinsamen Planetenradachse gelagert sind. Derart gekoppelte Planetenräder heißen auch doppelstufige Planetenräder. Bevorzugt umfasst jede Umlaufrädergetriebestufe drei oder vier Planetenräder. Im Vergleich zu getrennten, also einstufigen Planetenrädern ist der Aufbau des zweistufigen Umlaufrädergetriebes also einfach. Insbesondere werden weniger Einzelteile benötigt. Dadurch kann ein solches Umlaufrädergetriebe besonders effizient hergestellt und montiert werden.

Die Planetenräder sind vorzugsweise aus Polyoxymethylen (POM) hergestellt.

Erfindungsgemäß sind die auf einer gemeinsamen Planetenradachse gelagerten Planetenräder drehfest miteinander verbunden. Hierfür können die Planetenräder einer gemeinsamen Planetenradachse zunächst getrennt hergestellt und dann verbunden werden. Bevorzugt sind jedoch die auf einer gemeinsamen Planetenradachse gelagerten Planetenräder einstückig hergestellt. Ein Montage- oder Verbindungsschritt kann somit entfallen.

Zweistufige Umlaufrädergetriebe, bei denen die Planetenräder der beiden Stufen paarweise auf gemeinsamen Planetenradachsen gelagert und die auf einer gemeinsamen Planetenradachse gelagerten Planetenräder drehfest miteinander verbunden sind, werden auch als Wolfrom-Getriebe bezeichnet. Das erfindungsgemäße zweistufige Umlaufrädergetriebe ist somit ein Wolfrom-Getriebe.

Erfindungsgemäß ist ein Hohlrad einer motorseitigen Umlaufrädergetriebestufe drehfest und axialfest in einem Spindelantriebsbaugruppengehäuse und/oder in einem Umlaufrädergetriebegehäuse gelagert. Insbesondere ist das Hohlrad der motorseitigen Umlaufrädergetriebestufe mit dem Spindelantriebsbaugruppengehäuse oder dem Umlaufrädergetriebegehäuse laserverschweißt. Alternativ kann es einstückig mit einer Komponente des Umlaufrädergetriebegehäuses hergestellt sein. In einer weiteren Alternative kann das Hohlrad über eine Presspassung mit dem Spindelantriebsbaugruppengehäuse oder dem Umlaufrädergetriebegehäuse verbunden sein. Es ergibt sich so ein vergleichsweise einfacher Aufbau des Umlaufrädergetriebes.

Vorzugsweise ist das Umlaufrädergetriebe spiralverzahnt, wobei beide Umlaufrädergetriebestufen gleichsinnig spiralverzahnt sind. Spiralverzahnungen können insbesondere mit kunststofftechnischen Herstellungsverfahren einfach realisiert werden. Üblicherweise bringt eine Spiralverzahnung aus dem Verzahnungseingriff resultierende Axialkräfte mit sich. Im vorliegenden zweistufigen Umlaufrädergetriebe heben sich jedoch die aus den beiden Spiralverzahnungen der zwei Umlaufrädergetriebestufen resultierenden Axialkräfte im Wesentlichen auf. Somit ist das erfindungsgemäße Umlaufrädergetriebe global betrachtet axialkraftfrei. Auf entsprechende Elemente zur Abstützung der Kräfte kann folglich verzichtet werden, wodurch der Aufbau des Umlaufrädergetriebes besonders einfach wird.

In einer Variante ist die Motorwelle mit einem Sonnenrad einer motorseitigen Umlaufrädergetriebestufe drehgekoppelt, insbesondere wobei die Motorwelle über eine Kupplung mit dem Sonnenrad drehgekoppelt ist. Das Sonnenrad kann dabei auf eine Stahlwelle aufgepresst sein. Die Kupplung ist vorzugsweise eine Oldhamkupplung und dient dem Ausgleich eines eventuell vorhandenen Achsversatzes. Die Komponenten der Kupplung können ebenfalls auf die Stahlwelle aufgepresst sein. Somit wird das Antriebsmoment des Spindelantriebsmotors zuverlässig und mit hohem Wirkungsgrad in das zweistufige Umlaufrädergetriebe eingekoppelt.

Für den Fall, dass das Hohlrad mit dem Spindelantriebsbaugruppengehäuse oder dem Umlaufrädergetriebegehäuse laserverschweißt ist und die Verschweißung in einem Überlappstoß erfolgt, ist der außenliegende Fügepartner laserlichtdurchlässig gestaltet. Somit wird eine zuverlässige Verschweißung der beiden Fügepartner erreicht.

In einer Gestaltungsalternative ist vorgesehen, dass eine spindelseitige Umlaufrädergetriebestufe sonnenradfrei ausgeführt ist, wobei alle Planetenräder der spindelseitigen Umlaufrädergetriebestufe radial auf einem axialen Lagerfortsatz der Sonnenradwelle der motorseitigen Umlaufrädergetriebestufe gelagert sind. Der axiale Lagerfortsatz ersetzt somit das Sonnenrad. Er weist keine Verzahnung auf. Dadurch ist der Aufbau des Umlaufrädergetriebes besonders einfach.

Zudem kann ein Hohlrad der spindelseitigen Umlaufrädergetriebestufe mit der Spindel drehgekoppelt sein, insbesondere über eine Kupplung drehgekoppelt sein. Das Hohlrad der spindelseitigen Umlaufrädergetriebestufe stellt also den Abtrieb des Umlaufrädergetriebes dar. Die Kupplung ist bevorzugt eine drehelastische Kupplung, beispielsweise eine drehelastische Klauenkupplung. Dabei kann das spindelseitige Kupplungselement über eine Kerbverzahnung drehfest mit der Spindel verbunden sein. Es ergibt sich so eine zuverlässige Einkopplung des vom Umlaufrädergetriebe ausgehenden Drehmoments in die Spindel. Dies geschieht mit hohem Wirkungsgrad.

Bevorzugt ist ein Hohlrad der spindelseitigen Umlaufrädergetriebestufe in einem Spindelantriebsbaugruppengehäuse und/oder in einem Umlaufrädergetriebegehäuse drehbar gelagert. Damit ist auch die Spindel drehbar im Spindelantriebsbaugruppengehäuse und/oder im Umlaufrädergetriebegehäuse gelagert.

Ferner wird die Aufgabe durch eine Fahrzeugklappe der eingangs genannten Art mit einer erfindungsgemäßen Spindelantriebsbaugruppe gelöst. Eine solche Fahrzeugklappe lässt sich mit hohem Wirkungsgrad öffnen und/oder schließen. Zudem nimmt die Spindelantriebsbaugruppe nur einen vergleichsweise kleinen Bauraum ein. Anders gesagt, beschränkt die Spindelantriebsbaugruppe den Bauraum für die übrigen Komponenten der Fahrzeugklappe nur in besonders geringer Weise.

Neben den vorgenannten Fahrzeugklappen können auch Gepäck- oder Ladeklappen von Freizeit- oder Nutzfahrzeugen mit einer erfindungsgemäßen Spindelantriebsbaugruppe ausgestattet sein. Gleiches gilt für Motorhauben und Fahrzeugfrontklappen.

Zusätzlich wird die Aufgabe durch ein Verfahren der eingangs genannten Art gelöst, wobei das Umlaufrädergetriebe eine antriebsseitige Umlaufrädergetriebestufe und eine abtriebsseitige Umlaufrädergetriebestufe umfasst und das Verfahren die folgenden Schritte:
a) Montieren aller Planetenräder der zwei Umlaufrädergetriebestufen in einem singulären Planetenträger und
b) anschließendes Einsetzen des Planetenträgers in ein Hohlrad einer antriebsseitigen Umlaufrädergetriebestufe oder in ein Hohlrad einer abtriebsseitigen Umlaufrädergetriebestufe

Die antriebsseitige Umlaufrädergetriebestufe entspricht dabei einer motorseitigen Umlaufrädergetriebestufe und die abtriebsseitige Umlaufrädergetriebestufe einer spindelseitigen Umlaufrädergetriebestufe. Unter anderem aufgrund des singulären Planetenträgers ist die Montage im Vergleich zu bekannten Umlaufrädergetrieben vergleichsweise schnell und einfach.

Nach dem Schritt b) wird auf den im Hohlrad der antriebsseitigen Umlaufrädergetriebestufe oder im Hohlrad der abtriebsseitigen Umlaufrädergetriebestufe eingesetzten Planetenträger das Hohlrad der abtriebsseitigen Umlaufrädergetriebestufe bzw. das Hohlrad der antriebsseitigen Umlaufrädergetriebestufe aufgesetzt.

In einer Variante wird ein Umlaufrädergetriebegehäuse bereitgestellt und wird das Umlaufrädergetriebegehäuse mit dem antriebsseitigen Hohlrad verbunden.

Dabei kann das Umlaufrädergetriebegehäuse mit dem antriebsseitigen Hohlrad verschweißt werden, wobei insbesondere das Umlaufrädergetriebegehäuse oder das Hohlrad laserlichtdurchlässig ist und das Umlaufrädergetriebegehäuse mit dem Hohlrad laserverschweißt wird.

Die Erfindung wird nachstehend anhand eines Ausführungsbeispiels erläutert, das in den beigefügten Zeichnungen gezeigt ist. Es zeigen:
- Figur 1 schematisch eine erfindungsgemäße Fahrzeugklappe mit einer erfindungsgemäßen Spindelantriebsbaugruppe, die mittels eines erfindungsgemäßen Verfahrens montiert ist,
- Figur 2 die Spindelantriebsbaugruppe aus Figur 1 in einer schematischen Schnittansicht,
- Figur 3 die Spindelantriebsbaugruppe aus Figur 1 in einer Explosionsdarstellung,
- Figur 4 die Spindelantriebsbaugruppe aus Figur 1 in einer geschnittenen Detailansicht,
- Figur 5 einen Spindelantriebsmotor der Spindelantriebsbaugruppe aus Figur 1 in einer perspektivischen Ansicht,
- Figur 6 schematisch das Zusammenwirken des Spindelantriebsmotors aus Figur 5 mit einem Spindelantriebsbaugruppengehäuse in einer teilweise geschnittenen Darstellung,
- Figur 7 schematisch eine endseitige Ansicht des Spindelantriebsmotors aus den Figuren 5 und 6 sowie einer mit dem Spindelantriebsmotor verbindbaren Gehäusekappe,
- Figur 8 eine Explosionsdarstellung eines zweistufigen Umlaufrädergetriebes der Spindelantriebsbaugruppe aus Figur 1, das mittels eines erfindungsgemäßen Verfahrens montierbar ist,
- Figur 9 eine weitere Explosionsdarstellung des zweistufigen Umlaufrädergetriebes der Spindelantriebsbaugruppe aus Figur 1, wobei das Umlaufrädergetriebe teilweise mittels eines erfindungsgemäßen Verfahrens montiert ist,
- Figur 10 eine ein zweistufiges Umlaufrädergetriebe, eine Kupplung, eine Hysteresebremse und einen Spindelantriebsmotor umfassende Explosionsdarstellung der Spindelantriebsbaugruppe aus Figur 1,
- Figur 11 eine Spindeleinheit der Spindelantriebsbaugruppe aus Figur 1 in einer Explosionsdarstellung,
- Figur 12 ein Detail der Spindeleinheit aus Figur 11,
- Figur 13 ein Detail der Spindelantriebsbaugruppe aus Figur 1 in einer Schnittdarstellung und
- Figur 14 ein weiteres Detail der Spindelantriebsbaugruppe aus Figur 1 in einer Schnittdarstellung.

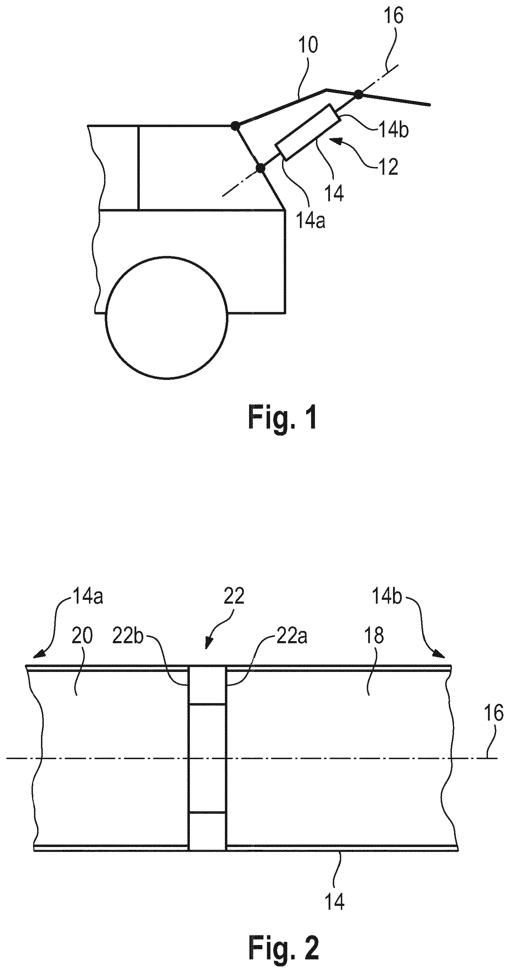

Figur 1 zeigt eine Fahrzeugklappe 10, die vorliegend eine Fahrzeugheckklappe ist, mit einer Spindelantriebsbaugruppe 12, mittels der die Fahrzeugklappe 10 geöffnet und/oder geschlossen werden kann.

Die Spindelantriebsbaugruppe 12 umfasst ein Spindelantriebsbaugruppengehäuse 14, das sich entlang einer Spindelantriebsachse 16 erstreckt.

Wie insbesondere anhand von Figur 2 zu sehen ist, sind im Spindelantriebsbaugruppengehäuse 14 eine in Figur 2 lediglich schematisch dargestellte Motorgetriebeeinheit 18 sowie eine ebenfalls in Figur 2 nur schematisch dargestellte Spindeleinheit 20 angeordnet.

Dabei umfasst das Spindelantriebsbaugruppengehäuse 14 zwischen seinen axialen Enden 14a, 14b einen axial beidseitig wirkenden Anschlagsabschnitt 22.

Die Motorgetriebeeinheit 18 ist auf einer ersten axialen Seite 22a des Anschlagsabschnitts 22 angeordnet und die Spindeleinheit 20 auf einer zweiten, der ersten axialen Seite 22a entgegengesetzten axialen Seite 22b.

Sowohl die Motorgetriebeeinheit 18 als auch die Spindeleinheit 20 liegen am Anschlagsabschnitt 22 an.

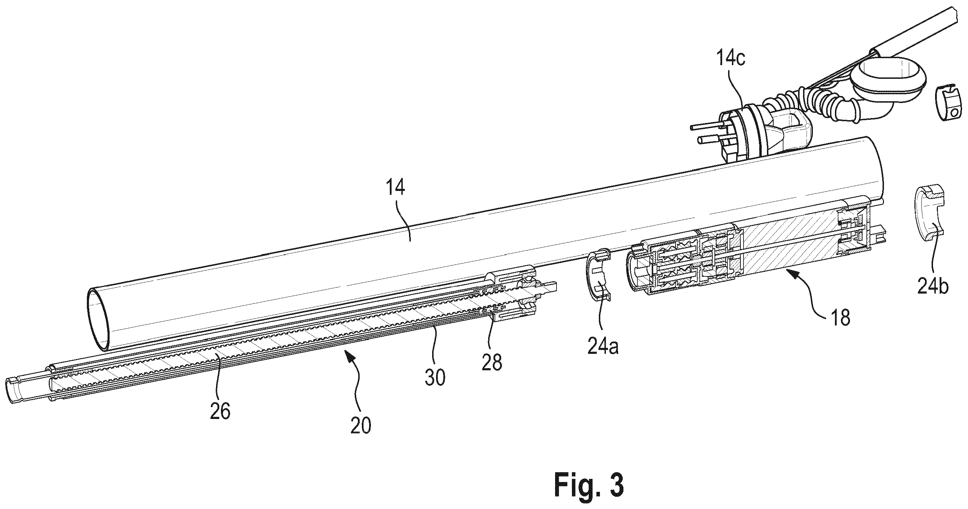

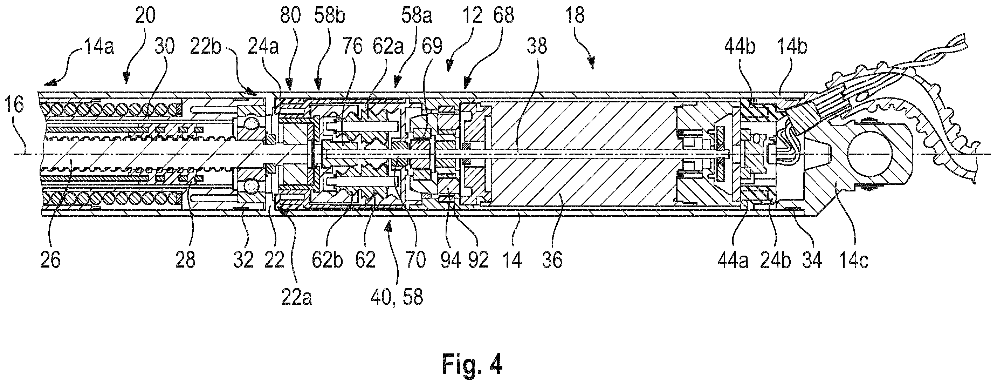

In der dargestellten Ausführungsform (siehe insbesondere die Figuren 3 und 4) ist die Motorgetriebeeinheit 18 über zwei Dämpfungselemente 24a, 24b, die aus einem Elastomer hergestellt sind, im Spindelantriebsbaugruppengehäuse 14 gelagert.

Die Spindeleinheit 20 umfasst neben einer Spindel 26 und einer mit dieser gekoppelten Spindelmutter 28 ein Führungsrohr 30.

In der dargestellten Ausführungsform ist das Führungsrohr 30 am Spindelantriebsbaugruppengehäuse 14 befestigt. Genauer gesagt, ist das Führungsrohr 30 mit dem Spindelantriebsbaugruppengehäuse 14 laserverschweißt. Die Laserschweißnaht 32 ist dabei lediglich schematisch eingezeichnet.

Der Anschlagsabschnitt 22 ist einstückig mit dem Spindelantriebsbaugruppengehäuse 14 produziert.

Dabei ist das Spindelantriebsbaugruppengehäuse 14 aus einem Kunststoff hergestellt.

Vorliegend ist der Anschlagsabschnitt 22 mittels Spritzgießen des Spindelantriebsbaugruppengehäuses 14 hergestellt.

Das Spindelantriebsbaugruppengehäuse 14 umfasst zusätzlich eine Gehäusekappe 14c. Diese schließt das Spindelantriebsbaugruppengehäuse 14 motorgetriebeeinheitsseitig ab.

Die Gehäusekappe 14c und das Spindelantriebsbaugruppengehäuse 14 sind laserverschweißt. Die Laserschweißnaht 34 ist dabei wieder nur schematisch eingezeichnet.

Die Montage der Spindelantriebsbaugruppe 12 läuft folgendermaßen ab.

Zunächst wird das Spindelantriebsbaugruppengehäuse 14 bereitgestellt.

Dann wird die Motorgetriebeeinheit 18 ausgehend von einer ersten axialen Seite des Spindelantriebsbaugruppengehäuses 14, auf der im gezeigten Beispiel das axiale Ende 14b angeordnet ist, in das Spindelantriebsbaugruppengehäuse 14 eingesetzt.

Dabei wird die Motorgetriebeeinheit 18 an die erste axiale Seite 22a des Anschlagsabschnitts 22 angelegt.

Die Spindeleinheit 20 wird von einer der ersten axialen Seite des Spindelantriebsbaugruppengehäuses 14 entgegengesetzten, zweiten axialen Seite 22b des Spindelantriebsbaugruppengehäuses 14 in dieses eingesetzt. In der dargestellten Ausführungsform ist auf dieser Seite das axiale Ende 14a angeordnet.

Die Spindeleinheit 20 wird an die zweite axiale Seite 22b des Anschlagsabschnitts 22 angelegt.

Ob zuerst die Motorgetriebeeinheit 18 oder zuerst die Spindeleinheit 20 am Spindelantriebsbaugruppengehäuse 14 montiert wird, ist für das Montageverfahren unerheblich. Es können auch die Motorgetriebeeinheit 18 und die Spindeleinheit 20 im Wesentlichen gleichzeitig montiert werden.

Wenn die Spindeleinheit 20 im Spindelantriebsbaugruppengehäuse 14 eingesetzt ist, wird diese darin befestigt. In der dargestellten Ausführungsform umfasst die Spindeleinheit 20 ein Führungsrohr 30, das mittels der Laserschweißnaht 32 am Spindelantriebsbaugruppengehäuse 14 befestigt wird.

Das Spindelantriebsbaugruppengehäuse 14 und das Führungsrohr 30 werden also laserverschweißt.

Nachfolgend wird das Spindelantriebsbaugruppengehäuse 14 am Ende 14b mittels einer Gehäusekappe 14c abgeschlossen. In diesem Zusammenhang wird das Spindelantriebsbaugruppengehäuse 14 mit der Gehäusekappe 14c laserverschweißt.

Die Motorgetriebeeinheit 18 umfasst einen Spindelantriebsmotor 36, der über eine Motorwelle 38 mit einem Getriebe 40 gekoppelt ist.

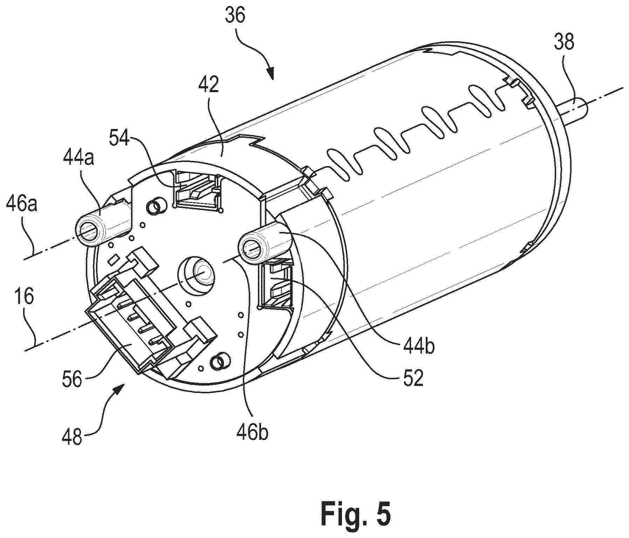

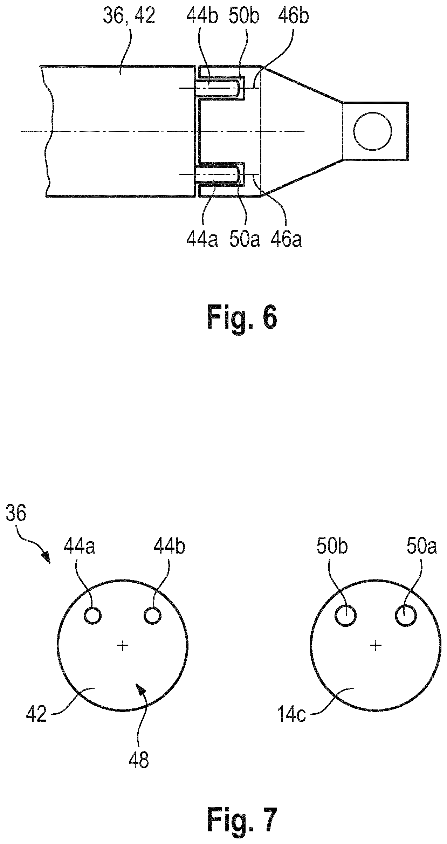

Die Figuren 5 - 7 zeigen den Spindelantriebsmotor 36 im Detail.

Nachdem die Motorgetriebeeinheit 18 im Spindelantriebsbaugruppengehäuse 14 angeordnet ist, ist auch der Spindelantriebsmotor 36 im Spindelantriebsbaugruppengehäuse 14 positioniert. Die Motorwelle 38 ist dabei im Wesentlichen koaxial zur Spindelantriebsachse 16.

Der Spindelantriebsmotor 36 und damit die Motorgetriebeeinheit 18 sind zudem über einen Formschluss bezüglich der Spindelantriebsachse 16 rotationsfest im Spindelantriebsbaugruppengehäuse 14 gelagert.

Genauer gesagt, ist der Spindelantriebsmotor 36 rotationsfest über einen Formschluss an der Gehäusekappe 14c gelagert, die ein Bestandteil des Spindelantriebsbaugruppengehäuses 14 ist.

Die rotationsfeste Lagerung erfolgt dabei über ein Motorgehäuse 42 des Spindelantriebsmotors 36.

An diesem sind in der dargestellten Ausführungsform zwei Antirotationsvorsprünge 44a, 44b vorgesehen, die sich im montierten Zustand des Spindelantriebsmotors 36 und damit auch der Motorgetriebeeinheit 18 im Wesentlichen entlang der Spindelantriebsachse 16 erstrecken.

Vorliegend sind die Antirotationsvorsprünge 44a, 44b kreiszylinderförmig, wobei im montierten Zustand des Spindelantriebsmotors 36 die zugeordneten Kreiszylindermittelachsen 46a, 46b im Wesentlichen parallel zur Spindelantriebsachse 16 verlaufen.

Die Antirotationsvorsprünge 44a, 44b sind an einer axialen Endseite 48 des Spindelantriebsmotors 36 vorgesehen, die der Motorwelle 38 abgewandt ist. Im montierten Zustand liegen die Antirotationsvorsprünge 44a, 44b also auf einer dem Getriebe 40 entgegengesetzten Seite des Spindelantriebsmotors 36.

Die Antirotationsvorsprünge 44a, 44b greifen im montierten Zustand in zugeordnete, am Spindelantriebsbaugruppengehäuse 14 vorgesehene Vertiefungen 50a, 50b ein. In der dargestellten Ausführungsform sind die Vertiefungen 50a, 50b an der Gehäusekappe 14c vorgesehen.

Genauer gesagt, sind in der dargestellten Ausführungsform die Vertiefungen 50a, 50b am Dämpfungselement 24b vorgesehen, das drehfest mit der Gehäusekappe 14c verbunden ist.

Die Antirotationsvorsprünge 44a, 44b können alternativ über elastische, auf den Antirotationsvorsprüngen 44a, 44b angeordnete Dämpfungskappen oder über elastische, in den Vertiefungen 50a, 50b angeordnete Dämpfungselemente in die Vertiefungen 50a, 50b eingreifen.

Wie insbesondere anhand Figur 5 zu erkennen ist, sind in der dargestellten Ausführungsform neben den Antirotationsvorsprüngen 44a, 44b zusätzlich ein erster elektrischer Leistungsanschluss 52, ein zweiter elektrischer Leistungsanschluss 54 sowie ein Sensoranschluss 56 an der axialen Endseite 48 des Spindelantriebsmotors 36 vorgesehen.

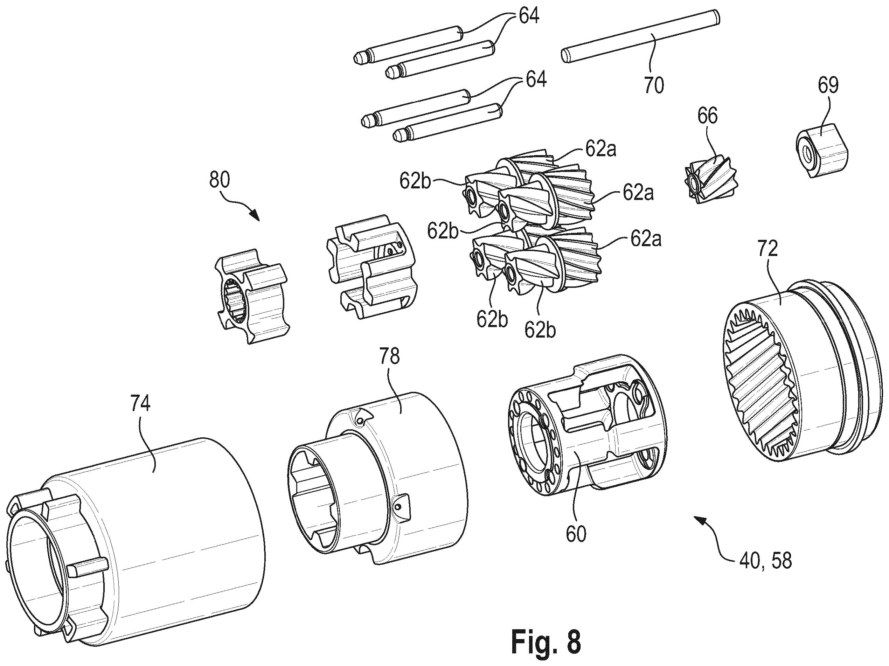

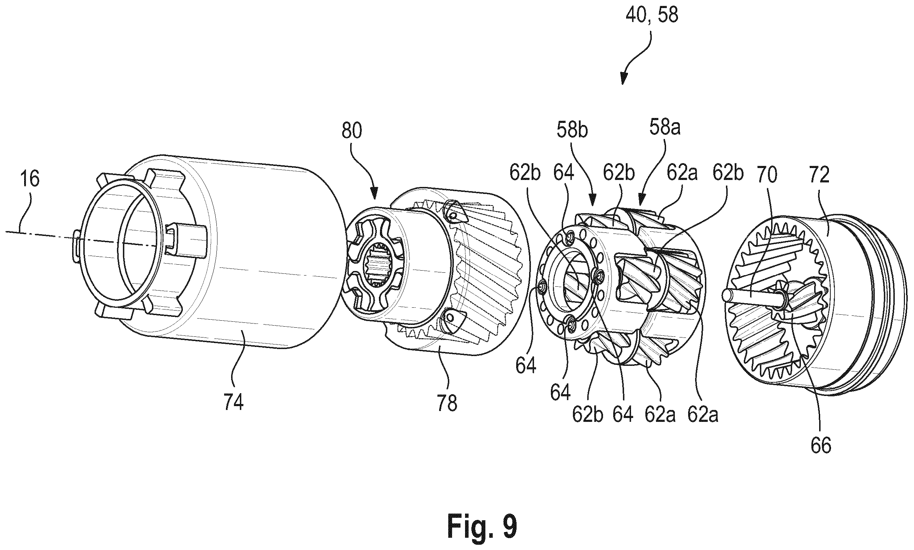

In den Figuren 8 und 9 ist das Getriebe 40 im Detail zu sehen.

Dabei ist zu erkennen, dass das Getriebe 40 ein zweistufiges Umlaufrädergetriebe 58 ist.

In diesem Zusammenhang umfasst es eine erste Umlaufrädergetriebestufe 58a, die auch als motorseitige oder antriebsseitige Umlaufrädergetriebestufe 58a bezeichnet wird, und eine zweite Umlaufrädergetriebestufe 58b, die auch als spindelseitige oder abtriebsseitige Umlaufrädergetriebestufe 58b bezeichnet wird.

Das Umlaufrädergetriebe 58 ist spiralverzahnt. Beide Umlaufrädergetriebestufen 58a, 58b weisen dabei gleichsinnige Spiralverzahnungen auf.

Zudem umfasst das zweistufige Umlaufrädergetriebe 58 lediglich einen einzigen, singulären Planetenträger 60. Dieser gehört also zu beiden Umlaufrädergetriebestufen 58a, 58b.

Darüber hinaus umfassen sowohl die motorseitige Umlaufrädergetriebestufe 58a als auch die spindelseitige Umlaufrädergetriebestufe 58b eine gleiche Anzahl an Planetenrädern 62a, 62b. Im dargestellten Ausführungsbeispiel umfasst jede der Umlaufrädergetriebestufen 58a, 58b vier Planetenräder 62a, 62b.

Dabei sind jeweils ein Planetenrad 62a der ersten Umlaufrädergetriebestufe 58a und ein Planetenrad 62b der zweiten Umlaufrädergetriebestufe 58b auf einer gemeinsamen Planetenradachse 64 gelagert.

Die auf einer gemeinsamen Planetenradachse 64 gelagerten Planetenräder 62a, 62b sind drehfest miteinander verbunden.

Das Umlaufrädergetriebe 58 funktioniert folgendermaßen.

Die Motorwelle 38 ist mit einem Sonnenrad 66 der motorseitigen Umlaufrädergetriebestufe 58a drehgekoppelt. Somit stellt das Sonnenrad 66 den Antrieb oder den Drehmomenteingang des Umlaufrädergetriebes 58 dar.

Nachdem diese Kopplung über eine Kupplung 68 erfolgt, ist streng genommen eine Getriebeeingangswelle 70 mit dem Sonnenrad 66 gekoppelt. Diese kann jedoch als Fortsetzung der Motorwelle 38 angesehen werden.

Die Kupplung 68 ist in der dargestellten Ausführungsform eine Oldhamkupplung zum Ausgleich von Achsversatz. In Figur 8 ist dabei lediglich ein getriebeseitiges Kupplungsteil 69 zu sehen, das mit der Getriebeeingangswelle 70 verbunden ist.

Das Sonnenrad 66 wirkt mit den Planetenrädern 62a der motorseitigen Umlaufrädergetriebestufe 58a zusammen, die wiederum mit einem Hohlrad 72 der motorseitigen Umlaufrädergetriebestufe 58a gekoppelt sind.

Das Hohlrad 72 ist drehfest und axialfest in dem Spindelantriebsbaugruppengehäuse 14 und/oder in einem Umlaufrädergetriebegehäuse 74 gelagert. Das Hohlrad 72 steht also im Wesentlichen fest im Raum.

Die motorseitige Umlaufrädergetriebestufe 58a ist mit der spindelseitigen Umlaufrädergetriebestufe 58b sowohl über den singulären Planetenträger 60 als auch über die einstückigen Planetenräder 62a, 62b gekoppelt.

Dabei ist die spindelseitige Umlaufrädergetriebestufe 58b sonnenradfrei ausgeführt.

Die Planetenräder 62b der spindelseitigen Umlaufrädergetriebestufe 58b sind lediglich radial auf einem axialen Lagerfortsatz 76 der Sonnenradwelle der motorseitigen Umlaufrädergetriebestufe 58a gelagert. Die Sonnenradwelle entspricht dabei der Getriebeeingangswelle 70.

Die Planetenräder 62b der spindelseitigen Umlaufrädergetriebestufe 58b sind ferner mit einem Hohlrad 78 der spindelseitigen Umlaufrädergetriebestufe 58b gekoppelt.

Dieses Hohlrad 78 ist über eine Kupplung 80 mit der Spindel 26 drehgekoppelt. Dabei ist das Hohlrad 78 im Spindelantriebsbaugruppengehäuse 14 und/oder im Umlaufrädergetriebegehäuse 74 drehbar gelagert.

Das Hohlrad 78 stellt also den Abtrieb oder den Drehmomentausgang des Umlaufrädergetriebes 58 dar.

Das Umlaufrädergetriebe 58 kann folgendermaßen montiert werden.

Zunächst werden alle Planetenräder 62a, 62b der beiden Umlaufrädergetriebestufen 58a, 58b im singulären Planetenträger 60 montiert.

Anschließend wird der Planetenträger 60 in das Hohlrad 72 der antriebsseitigen Umlaufrädergetriebestufe 58a oder in das Hohlrad 78 der abtriebsseitigen Umlaufrädergetriebestufe 58b eingesetzt.

Danach wird das jeweils andere Hohlrad, also das Hohlrad 78 oder das Hohlrad 72, auf diesen Verbund aufgesetzt.

Sodann wird das Umlaufrädergetriebegehäuse 74 bereitgestellt und mit dem Hohlrad 72 verbunden.

In der dargestellten Ausführungsform wird das Umlaufrädergetriebegehäuse 74 mit dem Hohlrad 72 in einem Überlappstoß laserverschweißt. Dafür ist das Umlaufrädergetriebegehäuse 74 laserlichtdurchlässig.

Damit die Spindelantriebsbaugruppe 12 im Betrieb Geräusche emittiert, die von einem Kraftfahrzeugnutzer als angenehm empfunden werden, ist der Verhältnis der Zähnezahl jedes der Planetenräder 62a der ersten Umlaufrädergetriebestufe 58a und der Zähnezahl jedes der Planetenräder 62b der zweiten Umlaufrädergetriebestufe 58b zu 2:1 gewählt.

In der dargestellten Ausführungsform umfasst jedes Planetenrad 62a der ersten Umlaufrädergetriebestufe 58a zwölf Zähne und jedes Planetenrad 62b der zweiten Umlaufrädergetriebestufe 58b sechs Zähne.

Das Verhältnis von 2:1 entspricht dem Intervall einer Oktave, wenn es auf ein Verhältnis von Schallfrequenzen bezogen ist.

Nachdem die von der ersten Umlaufrädergetriebestufe 58a emittierte Schallfrequenz maßgeblich durch die Zähnezahl der Planetenräder 62a der ersten Umlaufrädergetriebestufe 58a bestimmt wird und die von der zweiten Umlaufrädergetriebestufe 58b emittierte Schallfrequenz durch die Zähnezahl der Planetenräder 62b der zweiten Umlaufrädergetriebestufe 58b, emittiert die Spindelantriebsbaugruppe 12 im Betrieb also Schallfrequenzen, die eine Oktave bilden. Dies wird von Fahrzeugnutzern als besonders angenehm empfunden.

Zudem assoziiert ein Fahrzeugnutzer mit solchen angenehmen Geräuschen ein hohes Qualitätsniveau der Spindelantriebsbaugruppe 12.

Alternativ kann das Verhältnis der Zähnezahlen jedes der Planetenräder 62a der ersten Umlaufrädergetriebestufe und der Zähnezahl jedes der Planetenräder 62b der zweiten Umlaufrädergetriebestufe auch zu 3:2, 4:3, 5:4 oder 6:5 gewählt werden.

Die emittierten Schallfrequenzen bilden dann eine Quinte, eine Quarte, eine große Terz bzw. eine kleine Terz. Auch diese Intervalle werden von Menschen als angenehm empfunden.

Allgemein gesprochen, wird das Verhältnis der Zähnezahl eines jeden Planetenrades 62a der ersten Umlaufrädergetriebestufe 58a und der Zähnezahl eines jeden Planetenrades 62b der zweiten Umlaufrädergetriebestufe 58b derart gewählt, dass im Betrieb eine erste Schallfrequenz, die von der ersten Umlaufrädergetriebestufe 58a emittiert wird, um ein ganzzahliges Vielfaches eines Halbtons gegenüber einer zweiten Schallfrequenz, die von der zweiten Umlaufrädergetriebestufe 58b emittiert wird, abweicht.

Die bevorzugte Ausführungsform der Oktave umfasst dabei zwölf Halbtonschritte, die der Quinte sieben, die der Quarte fünf, die der großen Terz vier und die der kleinen Terz drei.

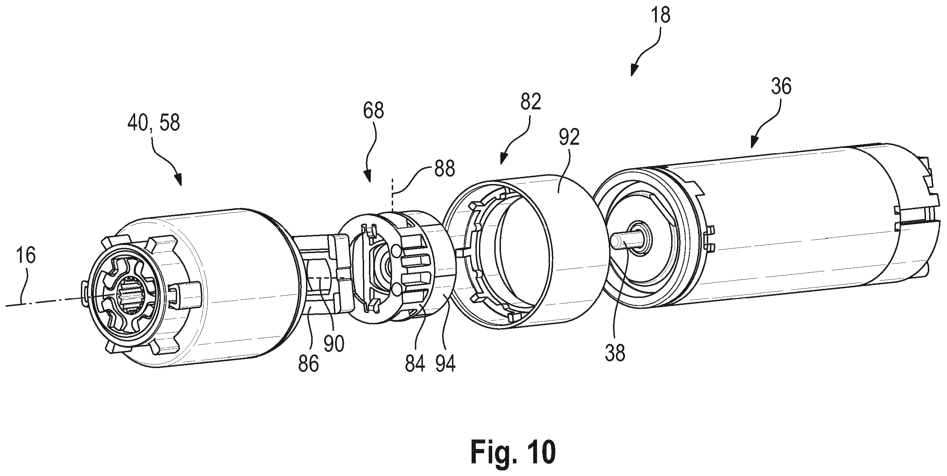

Die Kopplung des Spindelantriebsmotors 36 mit dem Getriebe 40, genauer gesagt mit dem zweistufigen Umlaufrädergetriebe 58, ist in Figur 10 im Detail dargestellt. Dabei sind dem Spindelantriebsmotor 36 und dem Getriebe 40 die einen Achsversatz ausgleichende Kupplung 68 und eine Hysteresebremse 82 antriebsmäßig zwischengeschaltet.

Wie bereits erwähnt, ist die Kupplung 68 eine Oldhamkupplung und umfasst ein antriebsmotorseitiges Kupplungsteil 84 sowie das getriebeseitige Kupplungsteil 69 (siehe Figur 8).

Die beiden Kupplungsteile 69, 84 sind über ein Kupplungszwischenteil 86 derart miteinander verbunden, dass die Motorwelle 38 und die Getriebeeingangswelle 70 drehfest miteinander verbunden sind.

Gleichzeitig ist das Kupplungszwischenteil 86 im montierten Zustand entlang einer Richtung 88 gegenüber dem antriebsmotorseitigen Kupplungsteil 84 verschiebbar.

Das getriebeseitige Kupplungsteil 69 ist gegenüber dem Kupplungszwischenteil 86 entlang einer Richtung 90 verschiebbar.

Die Richtung 88 und die Richtung 90 stehen dabei im Wesentlichen rechtwinklig aufeinander. Damit kann ein Achsversatz zwischen der Motorwelle 38 und der Getriebeeingangswelle 70 gemäß des Funktionsprinzips der Oldhamkupplung ausgeglichen werden.

Die Hysteresebremse 82 umfasst ein feststehendes Hysteresebremsenbauteil 92, das am Spindelantriebsbaugruppengehäuse 14 und/oder am Umlaufrädergetriebegehäuse 74 befestigt ist.

Zudem verfügt die Hysteresebremse 82 über ein mit der Motorwelle 38 drehgekoppeltes, drehbares Hysteresebremsenbauteil 94.

Dieses ist am antriebsmotorseitigen Kupplungsteil 84 befestigt oder in dieses integriert. Insbesondere ist das drehbare Hysteresebremsenbauteil 94 in das antriebsmotorseitige Kupplungsteil 84 eingespritzt.

Betrachtet man die Spindelantriebsbaugruppe 12 senkrecht zur Spindelantriebsachse 16, ist die Kupplung 68 in axialer Richtung im Wesentlichen vollständig innerhalb der Hysteresebremse 82, insbesondere innerhalb des feststehenden Hysteresebremsenbauteils 92 angeordnet. Der Aufbau der Kupplung 68 und der Hysteresebremse 82 ist also besonders kompakt.

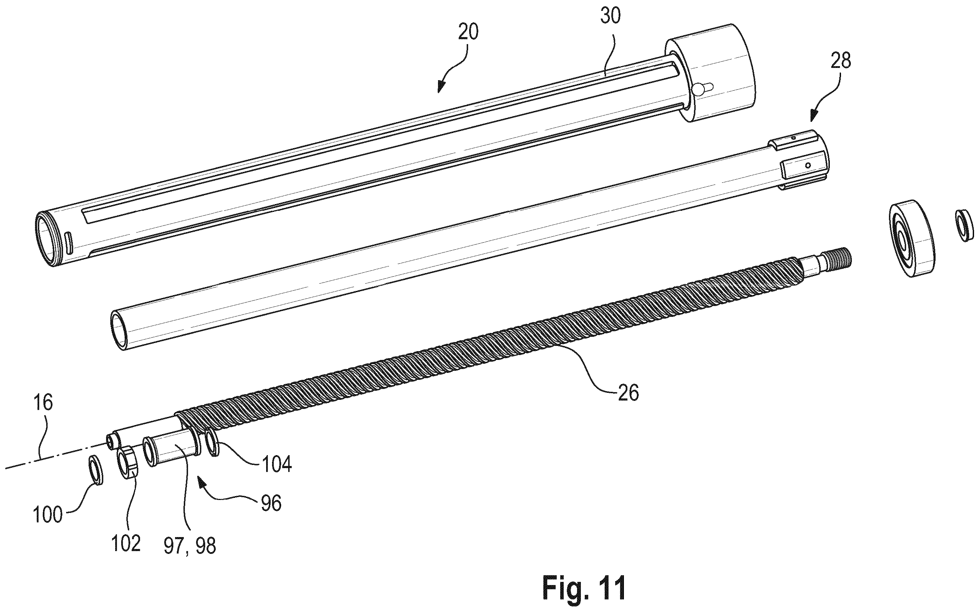

Die Figuren 11 - 14 zeigen die Spindeleinheit 20 im Detail.

Dabei ist an einem axialen Ende der Spindel 26 eine Anschlagsbaugruppe 96 angeordnet, die dazu ausgebildet ist, eine Beweglichkeit der Spindelmutter 28 entlang der Spindelantriebsachse 16 zu begrenzen. Konkret wird die Spindelmutter 28 so daran gehindert, sich über das Ende der Spindel 26 hinaus zu bewegen.

Die Anschlagsbaugruppe 96 umfasst ein plastisch verformbares Energieabsorptionsbauteil 97, das in der dargestellten Ausführungsform als Energieabsorptionshülse 98 ausgeführt ist, die im Wesentlichen koaxial die Spindel 26 umgibt.

Die Energieabsorptionshülse 98 ist also an der Spindel 26 gelagert.

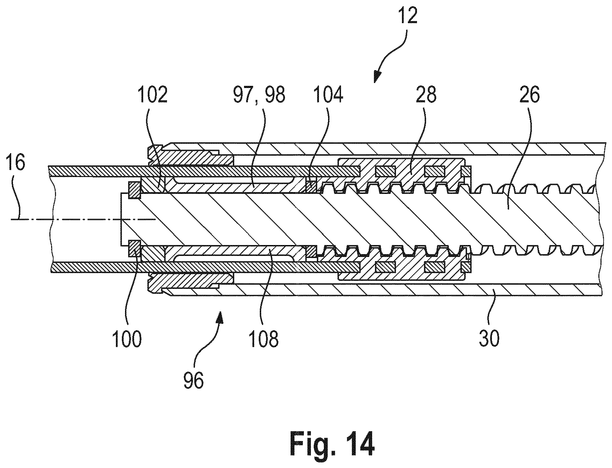

Die Energieabsorptionshülse 98 ist entlang der Spindelantriebsachse 16 zwischen einer spindelendseitigen Lagerscheibe 100 und der Spindelmutter 28 angeordnet (siehe insbesondere Figur 14).

Darüber hinaus ist zwischen der Energieabsorptionshülse 98 und der Lagerscheibe 100 ein Lagerelement 102 zur Lagerung der Spindel 26 am Spindelantriebsbaugruppengehäuse 14 vorgesehen.

Zwischen der Energieabsorptionshülse 98 und der Spindelmutter 28 ist darüber hinaus eine axial auf der Spindel 26 verschiebbare Anlaufscheibe 104 angeordnet.

Sowohl die Lagerscheibe 100 als auch die Anlaufscheibe 104 sind in der dargestellten Ausführungsform aus einem Metallwerkstoff hergestellt.

Die Energieabsorptionshülse 98 weist an ihren beiden axialen Enden jeweils einen als Krafteinleitungskragen ausgebildeten Kragen 106a, 106b auf.

Zwischen den Krägen 106a, 106b liegt ein in Richtung der Spindelantriebsachse 16 strauchbarer Verformungsabschnitt 108.

In der dargestellten Ausführungsform weist der Verformungsabschnitt lediglich einen einzigen Verformungsbereich auf. In alternativen Ausführungsformen kann er jedoch mehrere, insbesondere zwei Verformungsbereiche umfassen, wobei beide Verformungsbereiche in Richtung der Spindelantriebsachse 16 stauchbar sind.

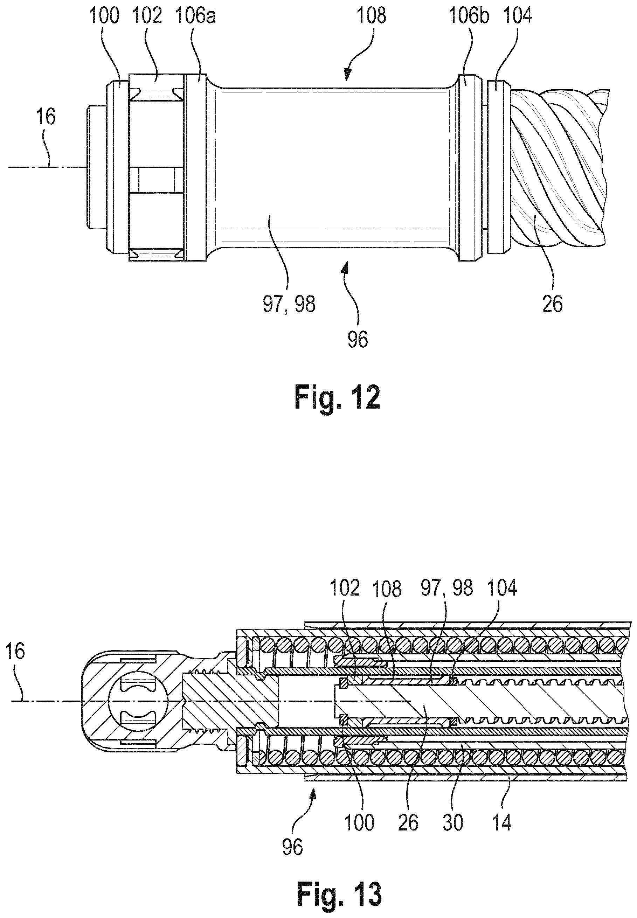

In einem Regulärbetrieb der Spindelantriebsbaugruppe 12 ist die Energieabsorptionshülse 98 im wesentlichen plastisch unverformt (siehe insbesondere die Figuren 12 bis 14). Dabei treten im Regulärbetrieb vorzugsweise Belastungen der Energieabsorptionshülse 98 auf, die ausschließlich Kräfte von weniger als 750 N umfassen.

Eine Belastung der Energieabsorptionshülse 98 mit einer Kraft von im Wesentlichen über 3000 N stellt für die dargestellte Ausführungsform ein Überlastereignis dar. Dadurch wird die Energieabsorptionshülse 98 plastisch verformt.

Ein solches Überlastereignis tritt auf, wenn die Spindelmutter 28 mit zu hoher Geschwindigkeit und/oder einer zu großen Kraft auf die Anschlagsbaugruppe 96, genauer gesagt die Energieabsorptionshülse 98 aufläuft.

Das kann beispielsweise bei einem Defekt der Hysteresebremse 82 passieren.

Auch kann ein Überlastereignis bei der Montage der Fahrzeugklappe 10 auftreten, wenn zwar die Spindelantriebsbaugruppe 12 schon mit der Fahrzeugklappe 10 verbunden ist, jedoch noch weitere Komponenten der Fahrzeugklappe 10 fehlen. Die Fahrzeugklappe 10 ist dann deutlich leichter als im Betrieb eines zugehörigen Fahrzeugs, für den die Spindelantriebsbaugruppe 12 ausgelegt ist. In diesem Zusammenhang kann die Spindelantriebsbaugruppe 12 mittels einer nicht näher bezeichneten Feder in eine Öffnungsstellung überführt werden. Aufgrund des verhältnismäßig geringen Gewichts der Fahrzeugklappe läuft die Spindelmutter 28 dann zu schnell an der Anschlagsbaugruppe 96 an.

Bei allen Überlastereignissen nimmt die Energieabsorptionshülse 98 die aus der überhöhten Geschwindigkeit und/oder der überhöhten Kraft resultierende Energie auf und schützt so die übrigen Komponenten der Spindelantriebsbaugruppe 12 vor Schäden.

In Figur 14 ist die Spindelmutter 28 an der Energieabsorptionshülse 98 anliegend dargestellt. Allerdings ist diese aus Gründen der besseren Übersichtlichkeit in ihrem plastisch unverformten Zustand gezeigt.

Bei einem nachfolgenden Betrieb der Spindelantriebsbaugruppe 12, in dem weiterhin das Öffnen und Schließen der Fahrzeugklappe 10 problemlos möglich ist, spricht man auch von einem Überlastfolgebetrieb. In diesem Betriebszustand ist die Energieabsorptionshülse 98 plastisch verformt (nicht dargestellt).

Für den Fall, dass die Energieabsorptionshülse 98 mehrere Verformungsbereiche umfasst, ist im Überlastfolgebetrieb nur einer der Verformungsbereiche plastisch verformt.

Tritt nachfolgend ein zweites Überlastereignis auf und umfasst die Energieabsorptionshülse 98 einen zweiten Verformungsbereich, so verformt sich dieser aufgrund des zweiten Überlastereignisses plastisch. Nachfolgend tritt die Spindelantriebsbaugruppe 12 in einen sekundären Überlastfolgebetrieb ein, in dem weiterhin das Öffnen und Schließen der Fahrzeugklappe 10 mittels der Spindelantriebsbaugruppe 12 gewährleistet ist.

## Patentansprüche

1. Spindelantriebsbaugruppe (12) zum Öffnen und/oder Schließen einer Fahrzeugklappe (10), mit einer sich entlang einer Spindelantriebsachse (16) erstreckenden Spindel (26) und einem mit der Spindel (26) antriebsmäßig gekoppelten Spindelantriebsmotor (36), dessen Motorwelle (38) im Wesentlichen koaxial zur Spindelantriebsachse (16) angeordnet ist, wobei der Spindelantriebsmotor (36) über ein zweistufiges Umlaufrädergetriebe (58) mit der Spindel (26) gekoppelt ist, wobei das zweistufige Umlaufrädergetriebe (58) einen singulären Planetenträger (60) umfasst, **dadurch gekennzeichnet, dass** eine erste Umlaufrädergetriebestufe (58a) und eine zweite Umlaufrädergetriebestufe (58b) eine gleiche Anzahl an Planetenrädern (62a, 62b) umfassen, wobei jeweils ein Planetenrad (62a) der ersten Umlaufrädergetriebestufe (58a) und ein Planetenrad (62b) der zweiten Umlaufrädergetriebestufe (58b) auf einer gemeinsamen Planetenradachse (64) gelagert sind, wobei auf einer gemeinsamen Planetenradachse (64) gelagerte Planetenräder (62a, 62b) drehfest miteinander verbunden sind, und wobei ein Hohlrad (78) der spindelseitigen Umlaufrädergetriebestufe (58a) in einem Spindelantriebsbaugruppengehäuse (14) und/oder in einem Umlaufrädergetriebegehäuse (74) drehbar gelagert ist.

2. Spindelantriebsbaugruppe (12) nach Anspruch 1, **dadurch gekennzeichnet, dass** das Umlaufrädergetriebe (58) spiralverzahnt ist, wobei beide Umlaufrädergetriebestufen (58a, 58b) gleichsinnig spiralverzahnt sind.

3. Spindelantriebsbaugruppe (12) nach einem der Ansprüche 1 und 2, **dadurch gekennzeichnet, dass** die Motorwelle (38) mit einem Sonnenrad (66) einer motorseitigen Umlaufrädergetriebestufe (58a) drehgekoppelt ist, insbesondere wobei die Motorwelle (38) über eine Kupplung (68) mit dem Sonnenrad (66) drehgekoppelt ist.

4. Spindelantriebsbaugruppe (12) nach einem der vorhergehenden Ansprüche, **dadurch gekennzeichnet, dass** ein Hohlrad (72) einer motorseitigen Umlaufrädergetriebestufe (58a) drehfest und axialfest in einem Spindelantriebsbaugruppengehäuse (14) und/oder in einem Umlaufrädergetriebegehäuse (74) gelagert ist.

5. Spindelantriebsbaugruppe (12) nach einem der vorhergehenden Ansprüche, **dadurch gekennzeichnet, dass** eine spindelseitige Umlaufrädergetriebestufe (58b) sonnenradfrei ausgeführt ist, wobei alle Planetenräder (62b) der spindelseitigen Umlaufrädergetriebestufe (58b) radial auf einem axialen Lagerfortsatz (76) der Sonnenradwelle der motorseitigen Umlaufrädergetriebestufe (58a) gelagert sind.

6. Spindelantriebsbaugruppe (12) nach einem der vorhergehenden Ansprüche, **dadurch gekennzeichnet, dass** ein Hohlrad (78) der spindelseitigen Umlaufrädergetriebestufe (58b) mit der Spindel (26) drehgekoppelt ist, insbesondere über eine Kupplung (80) drehgekoppelt ist.

7. Fahrzeugklappe (10), insbesondere Fahrzeugheckklappe oder Fahrzeugkofferraumdeckel, mit einer Spindelantriebsbaugruppe (12) nach einem der vorhergehenden Ansprüche.

8. Verfahren zur Montage eines Umlaufrädergetriebes (58) einer Spindelantriebsbaugruppe (12) zum Öffnen und/oder Schließen einer Fahrzeugklappe (10), wobei das Umlaufrädergetriebe (58) eine antriebsseitige Umlaufrädergetriebestufe (58a) und eine abtriebsseitige Umlaufrädergetriebestufe (58b) umfasst, mit den folgenden Schritten:
a) Montieren aller Planetenräder (62a, 62b) der zwei Umlaufrädergetriebestufen (58a, 58b) in einem singulären Planetenträger (60) und
b) anschließendes Einsetzen des Planetenträgers (60) in ein Hohlrad (72) einer antriebsseitigen Umlaufrädergetriebestufe (58a) oder in ein Hohlrad (78) einer abtriebsseitigen Umlaufrädergetriebestufe (58b), wobei nach dem Schritt b) auf den im Hohlrad (72) der antriebsseitigen Umlaufrädergetriebestufe (58a) oder im Hohlrad (78) der abtriebsseitigen Umlaufrädergetriebestufe (58b) eingesetzten Planetenträger (60) das Hohlrad (78) der abtriebsseitigen Umlaufrädergetriebestufe (58b) bzw. das Hohlrad (72) der antriebsseitigen Umlaufrädergetriebestufe (58a) aufgesetzt wird.

9. Verfahren nach Anspruch 8, **dadurch gekennzeichnet, dass** ein Umlaufrädergetriebegehäuse (74) bereitgestellt wird und das Umlaufrädergetriebegehäuse (74) mit dem antriebsseitigen Hohlrad (72) verbunden wird.

10. Verfahren nach Anspruch 8 oder 9, **dadurch gekennzeichnet, dass** das Umlaufrädergetriebegehäuse (74) mit dem antriebsseitigen Hohlrad (72) verschweißt wird, wobei insbesondere das Umlaufrädergetriebegehäuse (74) oder das Hohlrad (72) laserlichtdurchlässig ist und das Umlaufrädergetriebegehäuse (74) mit dem Hohlrad (72) laserverschweißt wird.

## Claims

1. A spindle drive assembly (12) for opening and/or closing a vehicle hatch (10), comprising a spindle (26) extending along a spindle drive axis (16) and a spindle drive motor (36) coupled to the spindle (26) in terms of drive, the motor shaft (38) of which is arranged substantially coaxially with respect to the spindle drive axis (16), wherein the spindle drive motor (36) is coupled to the spindle (26) via a two-stage epicyclic gearing (58), the two-stage epicyclic gearing (58) comprising a single planet carrier (60), **characterized in that** a first epicyclic gearing stage (58a) and a second epicyclic gearing stage (58b) comprise an identical number of planet gears (62a, 62b), wherein in each case one planet gear (62a) of the first epicyclic gearing stage (58a) and one planet gear (62b) of the second epicyclic gearing stage (58b) are mounted on a common planet gear axle (64), wherein planet gears (62a, 62b) mounted on a common planet gear axle (64) are connected to each other in a rotationally fixed manner, and wherein a ring gear (78) of the spindle-side epicyclic gearing stage (58a) is rotatably mounted in a spindle drive assembly housing (14) and/or in an epicyclic gearing housing (74).

2. The spindle drive assembly (12) according to claim 1, **characterized in that** the epicyclic gearing (58) is spiral-toothed, wherein both epicyclic gearing stages (58a, 58b) are spiral-toothed in the same direction.

3. The spindle drive assembly (12) according to either of claims 1 and 2, **characterized in that** the motor shaft (38) is rotationally coupled to a sun gear (66) of a motor-side epicyclic gearing stage (58a), in particular wherein the motor shaft (38) is rotationally coupled to the sun gear (66) via a coupling (68).

4. The spindle drive assembly (12) according to any of the preceding claims, **characterized in that** a ring gear (72) of a motor-side epicyclic gearing stage (58a) is mounted in a spindle drive assembly housing (14) and/or in an epicyclic gearing housing (74) in a rotationally fixed and axially fixed manner.

5. The spindle drive assembly (12) according to any of the preceding claims, **characterized in that** a spindle-side epicyclic gearing stage (58b) is designed without a sun gear, wherein all planet gears (62b) of the spindle-side epicyclic gearing stage (58b) are mounted radially on an axial mounting extension (76) of the sun gear shaft of the motor-side epicyclic gearing stage (58a).

6. The spindle drive assembly (12) according to any of the preceding claims, **characterized in that** a ring gear (78) of the spindle-side epicyclic gearing stage (58b) is rotationally coupled to the spindle (26), in particular is rotationally coupled via a coupling (80).

7. A vehicle hatch (10), in particular a vehicle tailgate or a vehicle boot lid, comprising a spindle drive assembly (12) according to any of the preceding claims.

8. A method for installing an epicyclic gearing (58) of a spindle drive assembly (12) for opening and/or closing a vehicle hatch (10), wherein the epicyclic gearing (58) comprises a drive-side epicyclic gearing stage (58a) and an output-side epicyclic gearing stage (58b), comprising the following steps:
a) installing all planet gears (62a, 62b) of the two epicyclic gearing stages (58a, 58b) in a single planet carrier (60), and
b) subsequently inserting the planet carrier (60) into a ring gear (72) of a drive-side epicyclic gearing stage (58a) or into a ring gear (78) of an output-side epicyclic gearing stage (58b), wherein after step b), the ring gear (78) of the output-side epicyclic gearing stage (58b) or the ring gear (72) of the drive-side epicyclic gearing stage (58a) is fitted onto the planet carrier (60) inserted in the ring gear (72) of the drive-side epicyclic gearing stage (58a) or in the ring gear (78) of the output-side epicyclic gearing stage (58b).

9. The method according to claim 8, **characterized in that** an epicyclic gearing housing (74) is provided and the epicyclic gearing housing (74) is connected to the drive-side ring gear (72).

10. The method according to claim 8 or 9, **characterized in that** the epicyclic gearing housing (74) is welded to the drive-side ring gear (72), wherein in particular the epicyclic gearing housing (74) or the ring gear (72) is transparent to laser light and the epicyclic gearing housing (74) is laser welded to the ring gear (72).

## Revendications

1. Ensemble d'entraînement à vis (12) pour l'ouverture et/ou la fermeture d'un ouvrant de véhicule (10), comprenant une vis (26) s'étendant le long d'un axe d'entraînement à vis (16) et un moteur d'entraînement à vis (36) qui est couplé de manière entraînante à la vis (26) et dont l'arbre moteur (38) est agencé de manière sensiblement coaxiale à l'axe d'entraînement à vis (16), le moteur d'entraînement à vis (36) étant couplé à la vis (26) par l'intermédiaire d'un engrenage planétaire (58) à deux étages, l'engrenage planétaire (58) à deux étages comprenant un porte-planétaire unique (60), **caractérisé en ce qu'**un premier étage d'engrenage planétaire (58a) et un deuxième étage d'engrenage planétaire (58b) comprennent un nombre identique de roues planétaires (62a, 62b), une roue planétaire (62a) du premier étage d'engrenage planétaire (58a) et une roue planétaire (62b) du deuxième étage d'engrenage planétaire (58b) étant respectivement montées sur un axe de roue planétaire commun (64), des roues planétaires (62a, 62b) montées sur un axe de roue planétaire commun (64) étant reliées les unes aux autres de manière solidaire en rotation, et une couronne à denture intérieure (78) de l'étage d'engrenage planétaire (58a) côté vis étant montée de manière mobile en rotation dans un carter d'ensemble d'entraînement à vis (14) et/ou dans un carter d'engrenage planétaire (74).

2. Ensemble d'entraînement à vis (12) selon la revendication 1, **caractérisé en ce que** l'engrenage planétaire (58) est à denture hélicoïdale, les deux étages d'engrenage planétaire (58a, 58b) étant à denture hélicoïdale dans le même sens.

3. Ensemble d'entraînement à vis (12) selon l'une des revendications 1 et 2, **caractérisé en ce que** l'arbre moteur (38) est couplé en rotation à une roue solaire (66) d'un étage d'engrenage planétaire (58a) côté moteur, l'arbre moteur (38) étant en particulier couplé en rotation à la roue solaire (66) par l'intermédiaire d'un accouplement (68).

4. Ensemble d'entraînement à vis (12) selon l'une des revendications précédentes, **caractérisé en ce qu'**une couronne à denture intérieure (72) d'un étage d'engrenage planétaire (58a) côté moteur est montée de manière solidaire en rotation et axialement fixe dans un carter d'ensemble d'entraînement à vis (14) et/ou dans un carter d'engrenage planétaire (74).

5. Ensemble d'entraînement à vis (12) selon l'une des revendications précédentes, **caractérisé en ce qu'**un étage d'engrenage planétaire (58b) côté vis est réalisé sans roue solaire, toutes les roues planétaires (62b) de l'étage d'engrenage planétaire (58b) côté vis étant montées radialement sur un prolongement de palier axial (76) de l'arbre de roue solaire de l'étage d'engrenage planétaire (58a) côté moteur.

6. Ensemble d'entraînement à vis (12) selon l'une des revendications précédentes, **caractérisé en ce qu'**une couronne à denture intérieure (78) de l'étage d'engrenage planétaire (58b) côté vis est couplée en rotation à la vis (26), en particulier par l'intermédiaire d'un accouplement (80).

7. Ouvrant de véhicule (10), en particulier hayon arrière de véhicule ou couvercle de coffre de véhicule, comprenant un ensemble d'entraînement à vis (12) selon l'une des revendications précédentes.

8. Procédé de montage d'un engrenage planétaire (58) d'un ensemble d'entraînement à vis (12) pour l'ouverture et/ou la fermeture d'un ouvrant de véhicule (10), l'engrenage planétaire (58) comprenant un étage d'engrenage planétaire (58a) côté entraînement et un étage d'engrenage planétaire (58b) côté sortie, comprenant les étapes suivantes :
a) le montage de toutes les roues planétaires (62a, 62b) des deux étages d'engrenage planétaire (58a, 58b) dans un porte-planétaire unique (60), et
b) l'insertion ultérieure du porte-planétaire (60) dans une couronne à denture intérieure (72) d'un étage d'engrenage planétaire (58a) côté entraînement ou dans une couronne à denture intérieure (78) d'un étage d'engrenage planétaire (58b) côté sortie, la couronne à denture intérieure (78) de l'étage d'engrenage planétaire (58b) côté sortie ou la couronne à denture intérieure (72) de l'étage d'engrenage planétaire (58a) côté entraînement étant mise en place, après l'étape b), sur le porte-planétaire (60) inséré dans la couronne à denture intérieure (72) de l'étage d'engrenage planétaire (58a) côté entraînement ou dans la couronne à denture intérieure (78) de l'étage d'engrenage planétaire (58b) côté sortie, respectivement.

9. Procédé selon la revendication 8, **caractérisé en ce qu'**un carter d'engrenage planétaire (74) est prévu et **en ce que** le carter d'engrenage planétaire (74) est relié à la couronne à denture intérieure (72) côté entraînement.

10. Procédé selon la revendication 8 ou 9, **caractérisé en ce que** le carter d'engrenage planétaire (74) est soudé à la couronne à denture intérieure (72) côté entraînement, le carter d'engrenage planétaire (74) ou la couronne à denture intérieure (72) étant en particulier transparent à la lumière laser, et le carter d'engrenage planétaire (74) étant soudé à la couronne à denture intérieure (72) au laser.
